(19) Europäisches Patentamt / European Patent Office / Office européen des brevets

(11) **EP 3 113 276 A1**

(12) **EUROPEAN PATENT APPLICATION**
published in accordance with Art. 153(4) EPC

(43) Date of publication:
**04.01.2017 Bulletin 2017/01**

(51) Int Cl.:
**H01M 10/0587** (2010.01)  **H01M 4/48** (2006.01)
**H01M 4/485** (2010.01)

(21) Application number: **15755296.9**

(22) Date of filing: **28.01.2015**

(86) International application number:
**PCT/JP2015/052383**

(87) International publication number:
**WO 2015/129376 (03.09.2015 Gazette 2015/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **25.02.2014 JP 2014034375**

(71) Applicant: **Kabushiki Kaisha Toshiba
Minato-ku
Tokyo 105-8001 (JP)**

(72) Inventors:
• **TANAKA, Masanori
Tokyo 105-8001 (JP)**
• **SARUWATARI, Hidesato
Tokyo 105-8001 (JP)**

(74) Representative: **Hoffmann Eitle
Patent- und Rechtsanwälte PartmbB
Arabellastraße 30
81925 München (DE)**

(54) **ROLLED ELECTRODE SET AND NONAQUEOUS-ELECTROLYTE BATTERY**

(57) According to one embodiment, a wound electrode group wound in a flat-shape is provided. The laminate includes a positive electrode, a negative electrode, and a separator provided between the positive electrode and the negative electrode. The negative electrode contains a negative electrode active material whose operating potential is nobler than 1.0 V (vs. Li/Li$^+$). Both surfaces of the edge part of the positive electrode face the negative electrode through the separator. Both surfaces of the edge part of the negative electrode face the positive electrode through the separator. An innermost circumference of the wound electrode group includes the edge part of the positive electrode and the edge part of the negative electrode.

F I G. 8

**Description**

Technical Field

Embodiments of the present invention relate to a wound electrode group and a nonaqueous electrolyte battery.

Background Art

Chargeable-and-dischargeable nonaqueous electrolyte batteries such as lithium ion secondary batteries are mainly used as a power source for electric cars including hybrid electric cars and plug-in electric cars, which have recently been rapidly spread. The lithium ion secondary battery is produced, for example, in the following method. An electrode group in which a positive electrode and a negative electrode are wound with a separator sandwiched therebetween is produced, and then the resulting electrode group is housed in a case made of metal such as aluminum or aluminum alloy. Subsequently, an opening of the case is welded together with a lid, a nonaqueous electrolytic solution is poured into the case through a liquid inlet provided on the lid, and then the liquid inlet is welded together with a sealing member to produce a battery unit. After that, the battery unit is subjected to initial charge or an aging treatment, whereby a lithium ion secondary battery is obtained.

In the nonaqueous electrolyte battery, it is necessary to increase an energy density in order to extend a driving distance of the electric car. One measure therefor is partial coating of electrodes. This is a method in which the innermost circumference of the wound electrode group is not coated with an electrode. According to this method, if a coating amount is varied, a length of the electrode is varied, and thus it is necessary to conduct a design considering this. As a result, the maximum energy density is not obtained by this method. For that reason, measures which do not decrease the energy density are demanded.

Citation List

Patent Literature

Patent Literature 1 Jpn. Pat. Appln KOKAI Publication No. 10-12220

Summary of Invention

Technical Problem

It is an object of the present invention to provide a wound electrode group capable of realizing a nonaqueous electrolyte battery which can exhibit a high energy density and an excellent life property, and a nonaqueous electrolyte battery which can exhibit a high energy density and an excellent life property.

Solution to Problem

According to a first embodiment, a wound electrode group is provided. The wound electrode group includes a laminate wound in a flat-shape. The laminate includes a positive electrode, a negative electrode, and a separator provided between the positive electrode and the negative electrode. The positive electrode includes a first end face and a second end face. The positive electrode extends from the first end face to the second end face. The negative electrode contains a negative electrode active material whose operating potential is nobler than 1.0 V (vs. Li/Li$^+$). The negative electrode includes a first end face and a second end face. The negative electrode extends from the first end face to the second end face. The positive electrode includes an edge part adjacent to the first end face. Both surfaces of the edge part of the positive electrode face the negative electrode through the separator. The negative electrode includes an edge part adjacent to the first end face. Both surfaces of the edge part of the negative electrode face the positive electrode through the separator. An innermost circumference of the wound electrode group includes the edge part of the positive electrode and the edge part of the negative electrode.

According to a second embodiment, a nonaqueous electrolyte battery is provided. The nonaqueous electrolyte battery includes the wound electrode group according to the first embodiment and a nonaqueous electrolyte.

Brief Description of Drawings

FIG. 1 is a partly developed perspective view of one example of a wound electrode group according to the first embodiment.

FIG. 2A is a schematic cross-sectional view of the wound electrode group shown in FIG. 1.

FIG. 2B shows schematic developed cross-sectional view showing a positive electrode and a negative electrode of the wound electrode group shown in FIG. 1.

FIG. 3 is a schematic perspective view of one example of a nonaqueous electrolyte battery according to the second embodiment.

FIG. 4 is an exploded perspective view of the nonaqueous electrolyte battery shown in FIG. 3.

FIG. 5 is a further exploded perspective view of the nonaqueous electrolyte battery shown in FIG. 3.

FIG. 6 is a schematic cross-sectional view of a wound electrode group from Example 2.

FIG. 7 is a schematic cross-sectional view of a wound electrode group from Example 3.

FIG. 8 is a schematic cross-sectional view of a wound electrode group from Comparative Example 1.

Description of Embodiments

Embodiments are explained below referring to drawings. The same number is applied to common structures throughout embodiments, and overlapping explanations are omitted. Each drawing is a schematic view for explaining the embodiment and promoting the understanding thereof. Shapes, sizes and ratios in the drawing, accordingly, may be different from those in a practical apparatus, and may be appropriately designed and changed considering the following descriptions and known technology.

(First Embodiment)

According to a first embodiment, a wound electrode group is provided. This wound electrode group includes a laminate wound in a flat-shape. This laminate includes a positive electrode, a negative electrode, a separator provided between the positive electrode and the negative electrode. The positive electrode includes a first end face and a second end face. The positive electrode extends from the first end face to the second end face. The negative electrode contains a negative electrode active material whose operating potential is nobler than 1.0 V (vs. Li/Li$^+$). The negative electrode includes a first end face and a second end face. The negative electrode extends from the first end face to the second end face. The positive electrode contains an edge part adjacent to the first end face. Both surfaces of this edge part of the positive electrode face the negative electrode through the separator. The negative electrode includes an edge part adjacent to the first end face. Both surfaces of this edge part of the negative electrode face the positive electrode through the separator. The innermost circumference of the wound electrode includes the edge part of the positive electrode and the edge part of the negative electrode.

For example, in a case where an electrode group using a material whose an operating potential is baser than 1.0 V (vs. Li/Li$^+$) such as carbon as the negative electrode active material is produced in a winding method, if the both surfaces of the negative electrode edge part face the positive electrode edge part in the innermost circumference, metal Li is precipitated on the edge part of the negative electrode by charge and discharge. The precipitated metal Li grows out in a direction toward the separator and may penetrate the same, which may possibly cause a short-circuit of the positive electrode and the negative electrode. For that reason, it is necessary to design the wound electrode group using the material whose operating potential is baser than 1.0 V (vs. Li/Li$^+$) as the negative electrode active material so that the both surfaces of the edge part of the negative electrode do not face the edge part of the positive electrode. Such a design, however, makes a structure in which the negative electrodes face each other on the innermost circumference of the wound electrode group. In the edge part contained in the innermost circumference of the negative electrode in the electrode group having such a structure, exchange of Li does not occur upon the charge or discharge, and thus the part turns into a part which does not contribute to the charge or discharge. As a result, the energy density is decreased in a design stage, and this leads to, for example, a decrease in a driving distance in an electric car.

In the wound electrode group according to the first embodiment, the both surfaces of the edge adjacent to the first end face contained in the innermost circumference of the positive electrode face the negative electrode. In addition, the both surfaces of the edge part adjacent to the first end face contained in the innermost circumference of the negative electrode face the positive electrode. According to such a structure, the edge part of the positive electrode and the edge part of the negative electrode included in the innermost circumference of the electrode group can contribute to the charge and discharge.

In addition, in the wound electrode group according to the first embodiment, the negative electrode contains the negative electrode active material, which makes the operating potential of the negative electrode nobler than 1.0 V (vs. Li/Li$^+$), and thus the precipitation of the metal Li on the negative electrode edge part can be suppressed during the charge and discharge and the precipitation of metal eluting from the positive electrode can also be suppressed. For those reasons, even if the both surfaces of the edge part adjacent to the first end face in the positive electrode face the negative electrode, it is possible to prevent the short circuit of the positive electrode and the negative electrode caused by the precipitation of metals including Li on the surface of the negative electrode during the charge and discharge.

As a result, the wound electrode group according to the first embodiment can realize a nonaqueous electrolyte battery capable of exhibiting a high energy density and an excellent life property.

In the wound electrode group according to the first embodiment, the positive electrode may further include a bent part included in the innermost circumference. This bent part of the positive electrode can face the first end face of the negative through the separator. In addition, the negative electrode may further include a bent part included in the innermost circumference. This bent part of the negative electrode can face the first end face of the positive electrode through the separator. The separator may, in the innermost circumference, include a first bent part and a second bent part. The first bent part faces the first end face of the positive electrode. The second bent part faces the first end face of the negative electrode.

In such a case, it is preferable that the wound electrode group according to the first embodiment satisfies a relative equation: $0.01 \leq (2L-L_A-L_C)/L \leq 0.8$. In the equation, $L$ [mm] is a distance between the first bent part and the second bent part of the separator, i.e., a length of the separator in the innermost circumference. $L_A$ [mm] is a distance between the first end face of the negative electrode and the bent part of the negative electrode, i.e., a length of the negative electrode in the innermost circumference. $L_C$ [mm] is a distance between the first end face of the positive electrode and the bent part of the positive electrode, i.e., a length of positive electrode in the innermost circumference. Among the wound electrode groups according to the first embodiment, the wound electrode groups satisfying the relative equation described above can further increase a part which can contribute to the charge-and-discharge among the part contained in the innermost circumferences of the positive electrode and the negative electrode while the short circuit between the positive electrode and the negative electrode can be further suppressed. As a result, such a wound electrode group can realize a nonaqueous electrolyte battery capable of exhibiting a higher energy density and a more excellent life property.

In the wound electrode group according to the first embodiment, the positive electrode may contain a positive electrode current collector, and a positive electrode layer formed on the positive electrode current collector, specifically both surfaces or one surface of the positive electrode current collector. Similarly, the negative electrode may contain a negative electrode current collector, and a negative electrode layer formed on the negative electrode current collector, specifically both surfaces or one surface thereof. It is preferable that the positive electrode layer is formed on both surfaces of the positive electrode current collector and the negative electrode layer is formed on both surfaces of the negative electrode current collector. In such a wound electrode group, larger parts of the positive electrode and the negative electrode can contribute to the charge-and-discharge, and thus it can realize a nonaqueous electrolyte battery capable of exhibiting a higher energy density. In particular, it is more preferable that the positive electrode layer is continuously coated on the both surfaces of the positive electrode current collector without intermission, and the negative electrode layer is continuously coated on the both surfaces of the negative electrode current collector without intermission.

The wound electrode group according to the first embodiment may be produced, for example, in the following procedures.

First, one positive electrode, one negative electrode, and two separators are provided. They are laminated in the order of the separator, the negative electrode, the separator, and the positive electrode to form a laminate. In this step, the lamination is performed so that the edge part adjacent to the first end face of the positive electrode does not face the negative electrode. Next, the laminate is transferred to a winding apparatus where the positive electrode is bent together with the separator so that at least a part of the positive electrode which does not face the negative electrode faces the negative electrode before the negative electrode is bent. Subsequently, the negative electrode is additionally bent, and the whole laminate is successively bent to obtain a spirally wound body. The thus obtained wound body is pressed, whereby a wound electrode group having a flat-shape can be obtained.

Although the procedures in which the positive electrode is first bent has been described above, the wound electrode group according to the first embodiment may also be obtained in a manner in which a laminate is formed so that the edge part adjacent to the first end face of the negative does not face the positive electrode, and the negative electrode is first bent.

Next, an example method for measuring the length $L$ of the separator in the innermost circumference, the length $L_A$ of the negative electrode in the innermost circumference, and the length $L_C$ of the positive electrode in the innermost circumference in the wound electrode group incorporated in the nonaqueous electrolyte battery is explained.

In the wound electrode group incorporated in the nonaqueous electrolyte battery, the length $L$ of the separator in the innermost circumference, the length $L_A$ of the negative electrode in the innermost circumference, and the length $L_C$ of the positive electrode in the innermost circumference can be measured in the following method.

First, the nonaqueous electrolyte battery is disassembled, and the electrode group is taken out therefrom. Next, the taken out electrode group is cut in a direction orthogonal to a winding axis. The length $L$ of the separator in the innermost circumference, the length $L_A$ of the negative electrode in the innermost circumference, and the length $L_C$ of the positive electrode in the innermost circumference are measured on the cut surface.

Each member in the wound electrode group according to the first embodiment is explained in detail below.

(1) Positive Electrode

The positive electrode, as described above, may include the positive electrode current collector, and the positive electrode layer formed on the positive electrode current collector, specifically the both surfaces or one surface thereof. The positive electrode current collector may include a part where the positive electrode layer is not formed on the surface, and the part can act as a positive electrode tab.

The positive electrode current collector may be formed, for example, of a metal foil. As a material of the metal foil capable of forming the positive electrode current collector, for example, aluminum or aluminum alloy may be used.

The positive electrode layer may contain the positive electrode active material.

Although the positive electrode active material is not particularly limited, it is preferable to use a material having a small variation in the volume of the active material during the charge-and-discharge. When such a positive electrode active material is used, it is possible to reduce the twist of the positive electrode during the charge-and-discharge, thus resulting in improved cycle characteristics. For example, it is preferable to contain lithium-containing nickel-cobalt-manganese oxides (for example, $Li_{1-x}Ni_{1-a-b-c}Co_aMn_bM1_cO_2$ wherein M1 is at least one metal selected from the group consisting of Mg, Al, Si, Ti, Zn, Zr, Ca and Sn, and $-0.2<x<0.5$, $0<a<0.5$, $0<b<0.5$, and $0{\leq}c<0.1$). In addition, it may include various oxides including, for example, lithium-containing cobalt oxides (for example, $LiCoO_2$), manganese dioxide, lithium-manganese composite oxides (for example, $LiMn_2O_4$, and $LiMnO_2$), lithium-containing nickel oxides (for example, $LiNiO_2$), lithium-containing nickel-cobalt oxides (for example, $LiNi_{0.8}Co_{0.2}O_2$), lithium-containing iron oxides, lithium-containing vanadium oxide, chalcogen compounds such as titanium disulfide and molybdenum disulfide, and the like. One or two or more kinds of the positive electrode active material may be used.

The positive electrode layer may contain a conductive agent and a binder, if necessary.

The conductive agent is blended if necessary for increasing the current-collecting performance, and suppressing a contact resistance between the positive electrode active material and the positive electrode current collector. As the conductive agent in the positive electrode layer, for example, acetylene black, carbon black, artificial graphite, or natural graphite may be used.

The binder has a function to bind the positive electrode active material to the positive electrode current collector. As the binder in the positive electrode layer, for example, polytetrafluoroethylene (PTFE), polyvinylidene fluoride (PVdF), a modified PVdF in which at least one of a hydrogen atom and fluorine atom is substituted by another substituent, a vinylidene fluoride-6-propylene fluoride copolymer, or a terpolymer of polyvinylidene fluoride / tetrafluoroethylene / 6-propylene fluoride may be used.

The positive electrode can be produced, for example, in the following manner.

First, the positive electrode active material, and optionally the conductive agent and the binder are put into and suspended in an appropriate solvent such as N-methyl pyrrolidone to prepare a positive electrode slurry.

When the positive electrode slurry is prepared, it is preferable to adjust the blending ratio of the positive electrode active material, the conductive agent, and the binder to a range of 75 to 96% by mass of the positive electrode active material, 3 to 20% by mass of the conductive agent, and 1 to 7% by mass of the binder.

The slurry obtained as above is coated on the positive electrode current collector. After that, the slurry coating is dried, and then rolled, for example, by a roll press method.

In this way, the positive electrode comprising the positive electrode current collector and the positive electrode layer formed on the positive electrode current collector are obtained.

(2) Negative Electrode

The negative electrode, as described above, may include the negative electrode current collector, and negative electrode layer formed on the negative electrode current collector, specifically the both surfaces or one surface thereof. The negative electrode current collector may include a part where the negative electrode layer is not formed on the surface, and the part can act as a negative electrode tab.

It is preferable to form the negative electrode current collector from a material which is electrically stable in a potential range in which lithium ions are absorbed into and released from the negative electrode layer. Examples of the material may include copper, nickel, stainless steel, aluminum, and aluminum alloy. The aluminum alloy contains preferably one or more elements selected from Mg, Ti, Zn, Mn, Fe, Cu, and Si.

The negative electrode layer may contain a negative electrode active material. The negative electrode active material includes a negative electrode active material whose operating potential is nobler than 1.0 V (vs. Li/Li$^+$). The negative electrode active material which has an absorption-and-release potential of Li nobler than 1.0 V (vs. Li/Li$^+$) and 2.3 V (vs. Li/Li$^+$) or less is preferable. Such a negative electrode active material may include, for example, lithium-titanium composite oxides (for example, spinel type lithium titanate), and monoclinic titanium dioxide. It is preferable to contain the lithium-titanium composite oxide. In addition to the above, a graphite material or carboneous material (for example, graphite, coke, carbon fiber, spherical carbon, carbonaceous material obtained by the pyrolytic of the gaseous carbonaceous substance, resin baked material and the like), a chalcogen compound (for example, titanium disulfide, molybdenum disulfide, niobium selenide, or the like), or a light metal (for example, aluminum, aluminum alloy, magnesium alloy, lithium, lithium alloy, or the like) may be contained in a content of 10% by weight or less. The kind of the negative electrode active material used may be one or more, and the selection is preferably made so that the operating potential of the negative electrode is nobler than 1.0 V (vs. Li/Li$^+$) in terms of the battery design. It is also preferable to use an active material having a small volume variation in the electrode-coated layer in the charge-and-discharge. When the negative electrode is produced in this way, the twist of the negative electrode can be reduced in the charge-and-discharge. As a result, the cycle characteristics can be improved.

The negative electrode layer may further contain a conductive agent and a binder if necessary.

The conductive agent is blended if necessary for increasing the current-collecting performance, and suppressing a contact resistance between the negative electrode active material and the negative electrode current collector. As the conductive agent in the negative electrode layer, for example, carbon materials may be used. Examples of the carbon material may include, for example, acetylene black, carbon black, coke, carbon fiber, graphite, and the like.

The binder has a function to bind the negative electrode active material to the negative electrode current collector. As the binder in the negative electrode material layer, for example, polytetrafluoroethylene (PTFE), polyvinylidene fluoride (PVdF), ethylene-propylene-diene copolymer (EPDM), styrene-butadiene rubber (SBR), or carboxymethyl cellulose (CMC) may be used.

The negative electrode can be produced, for example, in the following manner.

First, the negative electrode active material and the binder, and if necessary the conductive agent are suspended in a generally used solvent such as N-methyl pyrrolidone to prepare a slurry for forming the negative electrode.

When the slurry is prepared, it is preferable to blend the negative electrode active material, the conductive agent, and the binder in contents of 70% by mass or more and 96% by mass or less, 2% by mass or more and 20% by mass or less, and 2% by mass or more and 10% by mass or less, respectively. When the content of the conductive agent is adjusted to 2% by mass or more, the current-collecting performance of the negative electrode mix layer can be increased. When the content of the binder is adjusted to 1% by mass or more, the bindability between the negative electrode layer and the negative electrode current collector can be increased, and excellent cycle characteristics can be expected. On the other hand, it is preferable to adjust each of the contents of the conductive agent and the binder to 16% by mass or less, in order to increase the capacity.

The slurry obtained as above is coated on the negative electrode current collector. After that, the slurry coated on the negative electrode current collector is dried, and then rolled, for example, by a roll press method.

In this way, the negative electrode containing the negative electrode current collector, and the negative electrode layer formed on the negative electrode current collector are obtained.

(3) Separator

The separator is not particularly limited, and for example, a microporous film, a woven fabric, a non-woven fabric, or a laminate of the same or different materials thereof may be used. The material forming the separator may include polyethylene, polypropylene, ethylene-propylene copolymers, ethylene-butene copolymers, cellulose, and the like.

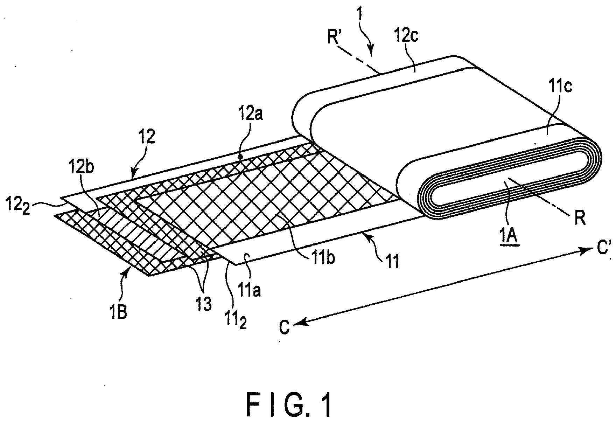

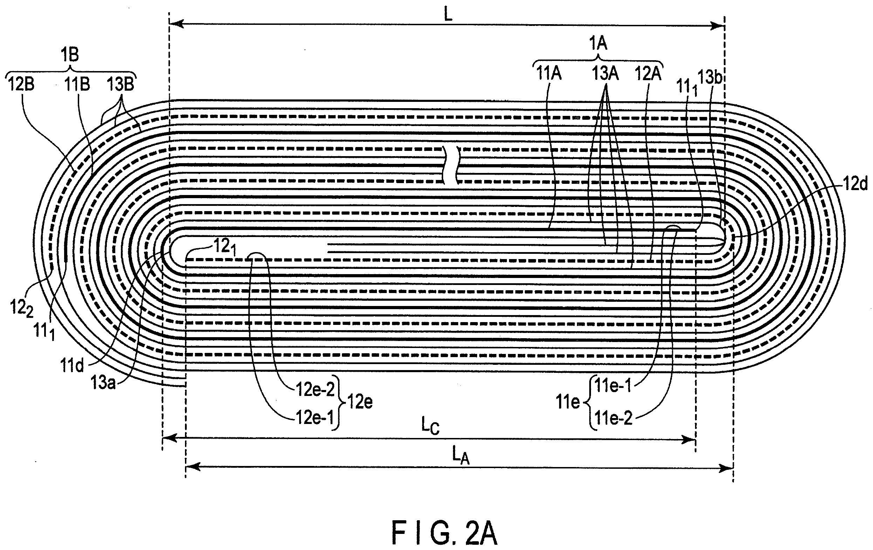

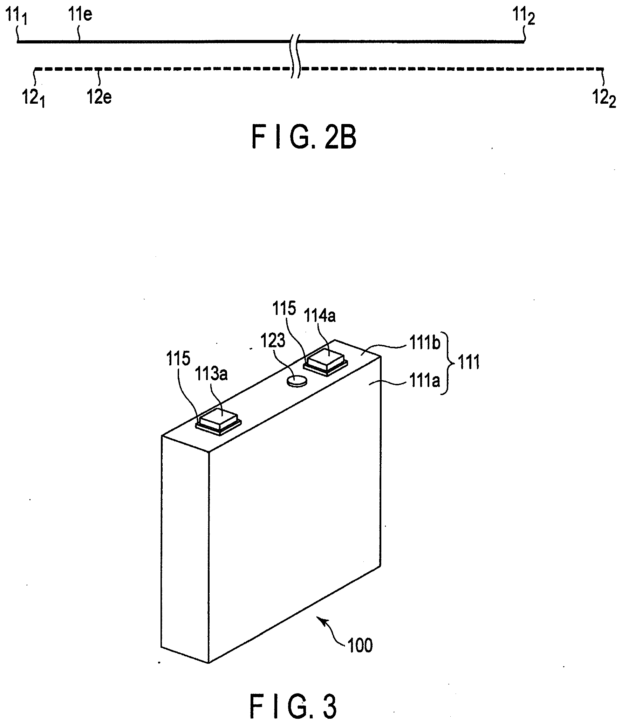

Next, referring to FIG 1, FIG 2A, and FIG 2B, one example of the wound electrode group according to the first embodiment is explained.

FIG 1 is a partly developed perspective view of one example of the wound electrode group according to the first embodiment. FIG 2A is a schematic cross-sectional view of the wound electrode group shown in FIG 1. FIG 2B is a schematic developed cross-sectional view showing a positive electrode and a negative electrode of the wound electrode group shown in FIG 1. Should be noted that FIG 2A and FIG 2B are schematic cross-sectional views in which the wound electrode group 1 shown in FIG 1 is cut along a winding direction C-C' shown in FIG 1.

The wound electrode group 1 shown in FIG 1, FIG 2A and FIG 2B includes one positive electrode 11, one negative electrode 12, and two separators 13. In FIG 1, ends of the two separators 13 are omitted in the developed part 1B of the wound electrode group 1. In FIG 2A and FIG 2B, the positive electrode 11 is indicated by a thick line, and the negative electrode 12 is indicated by a thin line, and the two separators 13 are indicated by broken lines. In FIG 2A, there are spaces among the positive electrode 11, the negative electrode 12, and the separators 13 so that the arrangement of the positive electrode 11, the negative electrode 12 and the separators 13 can be clearly understood. In fact, there are spaces between a first end face 11$_1$ of the positive electrode 11 and a bent part 13b of the separator 13, and between a first end face 12$_1$ of the negative electrode 12 and a bent part 13a of the separator 13, which are described below, as shown in the drawings. On the other hand, apart from the above, the positive electrode 11 and the separator 13, which are adjacent to each other, the negative electrode 12 and the separator 13, which are adjacent to each other, and the separators 13, which are adjacent to each other, are actually in contact with each other.

As shown in FIG 1, the positive electrode 11 includes a belt-like positive electrode current collector 11a, and positive electrode layers 11b (one of the positive electrode layers 11b is not shown) formed on the both surfaces thereof. The positive electrode current collector 11a includes a part 11c where the positive electrode layer 11b is not formed on the surface. The part 11c can act as a positive electrode tab.

The positive electrode 11 includes a first end face $11_1$ shown in FIG 2A and FIG 2B, and a second end face $11_2$ shown in FIG 1, FIG 2A, and FIG 2B. As apparent from FIG 2B, the positive electrode 11 extends from the first end face $11_1$ to the second end face $11_2$; in other words, each of the first end face $11_1$ and the second end face $11_2$ of the positive electrode 11 is a short side of the belt-like positive electrode 11. The positive electrode tab 11c shown in FIG 1 extends from the first end face $11_1$ to the second end face $11_2$ of the positive electrode 11, which is not clearly shown, though.

Similarly, as shown in FIG 1, the negative electrode 12 contains a belt-like negative electrode current collector 12a, and negative electrode layers 12b (one of the negative electrode layers 12b is not shown) formed on the both surfaces thereof. The negative electrode current collector 12a includes part 12c where the negative electrode layer 12b is not formed on the surface. The part 12 can act as a negative electrode tab.

The negative electrode 12 includes a first end face $12_1$ shown in FIG 2A and FIG 2B, and a second end face $12_2$ shown in FIG 1, FIG 2A, and FIG 2B. As apparent from FIG 2B, the negative electrode 12 extends from the first end face $12_1$ to the second end face $12_2$; in other words, each of the first end face $12_1$ and the second end face $12_2$ of the negative electrode 12 is a short side of the belt-like negative electrode 12. The negative electrode tab 12c shown in FIG 1 extends from the first end face $12_1$ to the second end face $12_2$ of the negative electrode 12, which is not clearly shown, though.

In the wound electrode group 1, as shown in FIG 1, the separator 13, the negative electrode 12, the separator 13, and the positive electrode 11 are laminated in this order to form a laminate 1. As shown in FIG 1, in the laminate 1, the positive electrode tab 11c and the negative electrode tab 12c extend from the laminate 1 in opposite directions.

The laminate 1 is wound into a flat shape in a direction R-R' shown in FIG 1 as a winding axis, thereby forming the wound electrode group 1. The wound electrode group 1 includes an innermost circumference 1A and an outermost circumference 1B shown in FIG 1 and FIG 2A. In the development view of FIG 2B, the first end face $11_1$ of the positive electrode 11 and the first end face $12_1$ of the negative electrode 12, included in the innermost circumference 1A of the wound electrode group 1, are shown at the left end. On the other hand, the second end face $11_2$ of the positive electrode 11 and the second end face $12_2$ of the negative electrode 12, included in the outermost circumference 1B of the wound electrode group 1, are shown at the right end. The outermost circumference 1B of the wound electrode group 1 is a developed part in FIG 1.

In the positive electrode 11 of the wound electrode group 1, a bent part 11d is formed on the innermost circumference 1A by winding the laminate 1 in a flat shape. Similarly, in the negative electrode 12, a bent part 12d is formed on the innermost circumference 1A by winding the laminate 1 in a flat shaped. In addition, in the separator 13, a first bent part 13b, which is in contact with the bent part 12d of the negative electrode 12, and a second bent part 13a, which is in contact with the bent part 11d of the positive electrode 11, are formed on the innermost circumference 1A by winding the laminate 1 in a flat shape. In other words, the innermost circumference 1A of the wound electrode group 1 includes a part 11A from the first end face $11_1$ to the bent part 11d in the positive electrode 11, a part 12B from the first end face $12_1$ to the bent part 12d in the negative electrode 12, and a part 13A of the separator 13. Should be noted that, in FIG 2A, the bent part 11d of the positive electrode 11 and the bent part 12d of the negative electrode 12 are depicted as if they are curved parts. In actuality, however, the positive electrode 11 is folded so that a crease is produced in the positive electrode current collector 11a at the bent part 11d, and the negative electrode 12 is folded so that a crease is produced in the negative electrode current collector 12a at the bent part 12d.

As shown in FIG 2A, in the innermost circumference 1A of the wound electrode group 1, the first end face $11_1$ of the positive electrode 11 faces the bent part 12d of the negative electrode 12 through the first bent part 13b of the separator 13. Here, there is a space between the first end face $11_1$ of the positive electrode 11 and the first bent part 13b of the separator 13. Similarly, in the innermost circumference 1A of the wound electrode group 1, the first end face $12_1$ of the negative electrode 12 faces the bent part 11d of the positive electrode 11 through the second bent part 13a of the separator 13. Here, there is a space between the first end face $12_1$ of the negative electrode 12 and the second bent part 13a of the separator 13.

In the edge part 11e, which is adjacent to the first end face $11_1$ of the positive electrode 11 contained in the innermost circumference 1A of the wound electrode group 1 shown in FIG. 2A, the both surfaces thereof 11e-1 and 11e-2 face the negative electrode 12 through the separator 13. Similarly, in the edge part 12e, which is adjacent to the first end face $12_1$ of the negative electrode 12, the both surfaces thereof 12e-1 and 12e-2 face the positive electrode 11 through the separator 13.

As shown in FIG. 2A, a length of the part 11A contained in the innermost circumference 1A of the electrode group 1 in the positive electrode 11, i.e., the length from the first end face $11_1$ of the positive electrode 11 to the bent part 11d of the positive electrode 11 is $L_C$ [mm]. A length of the part 12A contained in the innermost circumference 1A of the electrode group 1 in the negative electrode 12, i.e., a length from the first end face $12_1$ of the negative electrode 12 to the bent part 12d of the negative electrode 12 is $L_A$ [mm]. A length in the innermost circumference 1A of the separator 13, i.e., a length from the bent part 13a of the separator 13 to the bent part 13b of the separator 13 is L [mm]. In the wound electrode group 1 shown in FIG 1, FIG 2A and FIG 2B, the length L of the separator 13, the length $L_C$ of the positive electrode 11, and the length $L_A$ of the negative electrode 12 in the innermost circumference 1A satisfy: $0.01 \leq (2L-L_A-L_C)/L \leq 0.8$.

The outermost circumference 1B of the wound electrode group 1 shown in FIG 1, FIG 2A and FIG 2B includes a part 11B of the positive electrode 11 including the second end face $11_2$, and a part 12B of the negative electrode 12 including the second end face $12_2$. As shown in FIG 2A, the part 12B of the negative electrode 12 faces the part 11B of the positive electrode 11 through the separator 13, and is located in the side further out than the part 11B of the positive electrode 11. Parts 13B of the two separators 13 are provided on the outside of the part 12B of the negative electrode 12. As shown in FIG. 2A, the two separators 13 are wound so that they surround the second end face $11_2$ of the positive electrode 11 and the second end face $12_2$ of the negative electrode 12.

According to the first embodiment, the flat-type wound electrode group is provided. In the wound electrode group, the negative electrode contains the negative electrode active material whose operating potential is nobler than 1.0 V (vs. Li/Li$^+$). In addition, in the innermost circumference of the wound electrode group, the both surfaces of the edge part of the positive electrode face the negative electrode through the separator, and the both surfaces of the edge part of the negative electrode face the positive electrode through the separator. Because of these, the flat-type wound electrode group according to the first embodiment can realize the nonaqueous electrolyte battery capable of exhibiting the high energy density and the excellent life property.

(Second Embodiment)

According to a second embodiment, a nonaqueous electrolyte battery is provided. This nonaqueous electrolyte battery includes the wound electrode group according to the first embodiment, and a nonaqueous electrolyte.

The nonaqueous electrolyte battery according to the second embodiment may further contain a container member housing the wound electrode group and the nonaqueous electrolyte.

The nonaqueous electrolyte battery according to the second embodiment may further includes a positive electrode terminal electrically connected to the positive electrode of the wound electrode group, and a negative electrode terminal electrically connected to the negative electrode of the wound electrode group. Each of the positive electrode terminal and the negative electrode terminal can be attached to the container member via, for example, an insulating member.

Next, the nonaqueous electrolyte, the container member, the positive electrode terminal, the negative electrode terminal, and the insulating member, which can be used in the nonaqueous electrolyte battery according to the second embodiment, are explained.

(1) Nonaqueous Electrolyte

As the nonaqueous electrolyte, it is possible to use a product prepared by dissolving an electrolyte (for example, a lithium salt) in a nonaqueous solvent.

The nonaqueous solvent may include, for example, ethylene-carbonate (EC), propylene carbonate (PC), butylene carbonate (BC), dimethyl carbonate (DMC), diethyl carbonate (DEC), ethylmethyl carbonate (EMC), $\gamma$-butyrolactone ($\gamma$-BL), sulpholane, acetonitrile, 1,2-dimethoxyethane, 1,3-dimethoxypropane, dimethyl ether, tetrahydrofuran (THF), 2-methyltetrahydrofuran, and the like. One nonaqueous solvent may be used alone or a mixture of two or more nonaqueous solvents may be used.

The electrolyte may include, for example, lithium salts such as lithium perchlorate ($LiClO_4$), lithium hexafluorophosphate ($LiPF_6$), lithium tetrafluoroborate ($LiBF_4$), lithium hexafluoroarsenate ($LiAsF_6$), and lithium trifluoromethanesulfonate ($LiCF_3SO_3$). One electrolyte may be used alone or a mixture of two or more electrolytes may be used. It is preferable that an dissolved amount of the electrolyte to the nonaqueous solvent is adjusted to 0.2 mol/L to 3 mol/L. When the concentration of the electrolyte is too low, sufficient ion-conductivity may not be obtained. On the other hand, when the amount of the electrolyte supplied to the nonaqueous solvent is too large, the electrolyte may not be completely dissolved in the nonaqueous solvent.

(2) Container Member

The container member has preferably a rectangular shape because the nonaqueous electrolyte battery according to the second embodiment includes the flat-shaped wound electrode group. The shape of container member which can be included in the nonaqueous electrolyte battery according to the second embodiment, however, is not limited to the rectangular one, and can be varied according to the application.

As the container member, a metal container member may be used, for example. As the material for the container member, aluminum, aluminum alloy, iron (Fe), iron plated with nickel (Ni), and stainless steel (SUS) may be used, for example.

Alternatively, the container member may be made of a laminate film. As the laminate film, it is possible to use a film formed of a metal layer and two resin layers sandwiching the metal layer therebetween.

(3) Positive Electrode Terminal and Negative Electrode Terminal

It is desirable to form the positive electrode terminal and the negative electrode terminal from, for example, aluminum or aluminum alloy.

The connection of the positive electrode terminal to the positive electrode can be performed, for example, via a positive electrode lead. Similarly, the connection of the negative electrode terminal to the negative electrode can be performed, for example, via a negative electrode lead. It is preferable that the positive electrode lead and the negative electrode lead are formed, for example, from aluminum or aluminum alloy.

(4) Insulating Member

As a material for the insulating member, for example, a resin may be used. As a resin used for the insulating member, any resin can be used so long as it is resistant to the electrolytic solution. For example, polyethylene, polypropylene, an ethylene-vinyl acetate copolymer, an ethylene-vinyl acetate-alcohol copolymer, an ethylene-acrylic acid copolymer, an ethylene-ethyl acrylate copolymer, an ethylene-methacrylate copolymer, an ethylene-methacrylate-acrylate copolymer, an ethylene-methyl methacrylate copolymer, ionomer, polyacrylonitrile, polyvinylidene chloride, polytetrafluoroethylene, polychlorotrifluoroethylene, polyphenylene ether, polyethylene terephthalate, or polytetrafluoroethylene can be used. One of the resins described above may be used alone or a mixture of multiple kinds of resins may be used. Among these, it is preferable to use polypropylene or polyethylene.

Next, one example of the nonaqueous electrolyte battery according to the second embodiment is explained in detailed referring to FIG. 3 to FIG. 5.

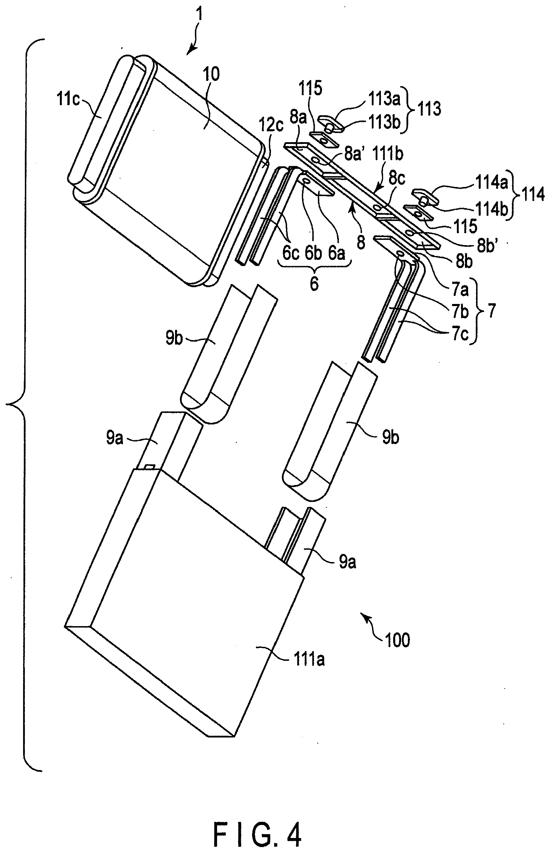

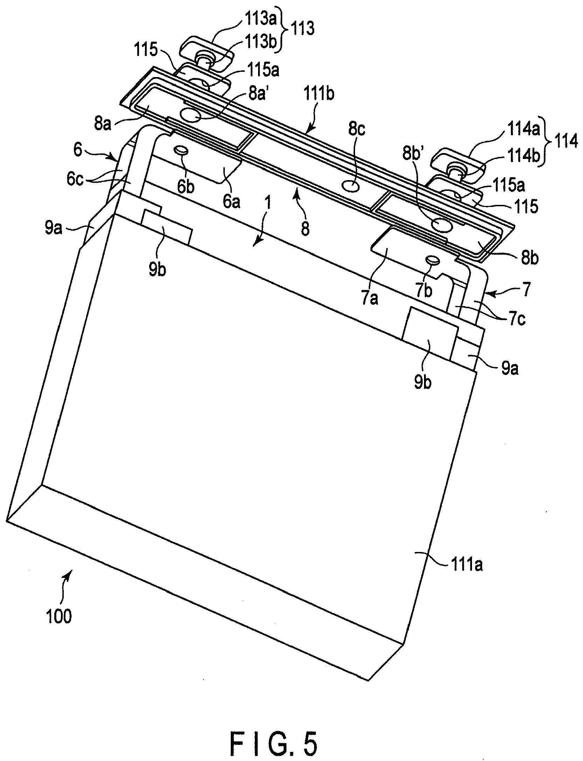

FIG. 3 is a schematic perspective view of one example of the nonaqueous electrolyte battery according to the second embodiment. FIG. 4 is an exploded perspective view of the nonaqueous electrolyte battery shown in FIG. 3. FIG. 5 is a further exploded perspective view of the nonaqueous electrolyte battery shown in FIG. 3.

A nonaqueous electrolyte secondary battery 100 of this example is, as shown in FIG. 3 to FIG. 5, a rectangular nonaqueous electrolyte battery including a container member 111, an electrode group 1 housed in the container member 111, and a nonaqueous electrolytic solution (not shown) with which the electrode group 1 is impregnated.

The electrode group 1 is the flat-shaped wound electrode group 1, which has been explained referring to FIG 1, FIG 2A and FIG 2B. The electrode group 1 excluding a positive electrode tab 11c and a negative electrode tab 12c is coated with an insulating tape 10.

As shown in FIG. 3 to FIG. 5, the container member 111 includes a cylindrical metal container 111a having rectangular shape with a bottom and having an opening, and a rectangular plate-shaped sealing member 111b provided on the opening of the container 111a. The sealing member 111b is joined to the opening of the container 111a, for example, by welding such as laser welding. On the sealing member 111b, two through holes (not shown) and an inlet (not shown) are opened.

As shown in FIG. 4 and FIG. 5, the nonaqueous electrolyte secondary battery 100 of this example further includes a positive electrode lead 6 and a negative electrode lead 7.

The positive electrode lead 6 includes a connection plate 6a having a through hole 6b, and a current-collector part 6c which is bifurcated from the connection plate 6a and extends downward. Similarly, the negative electrode lead 7 includes a connection plate 7a having a through hole 7b, and a current-collector part 7c which is bifurcated from the connection plate 7a and extends downward.

As shown in FIG. 4 and FIG. 5, an insulator 8 is provided on a back surface of the sealing member 111b. The insulator 8 has a first recess 8a and a second recess 8b on the back surface. Each of a through hole 8a' and a through hole 8b' is opened on each of the first recess 8a and the second recess 8b, and each of the through holes 8a' and 8b' is communicated to each of the through holes on the sealing member 111b. The connection plate 6a of the positive electrode lead 6 is provided in the first recess 8a, and the connection plate 7a of the negative electrode lead 7 is provided in the second recess 8b. In addition, a through hole 8c, communicating with the inlet of the sealing member 111b, is opened in the insulator 8.

The positive electrode lead 6 is joined to the positive electrode tab 11c of the electrode group 1 in a state in which the circumference of the positive electrode tab 11c is sandwiched between the bifurcated current-collector part 6c. The negative electrode lead 7 is joined to the negative electrode tab 12c of the electrode group 2 in a state in which the circumference of the negative electrode tab 12c is sandwiched between the bifurcated current-collector part 7c. In this way, the positive electrode lead 6 is electrically connected to the positive electrode tab 3b of the electrode group 2, and the negative electrode lead 7 is electrically connected to the negative electrode tab 4b of the electrode group 2.

As shown in FIG. 4 and FIG. 5, the nonaqueous electrolyte secondary battery 100 of this example contains two insulating members 9a. One insulating member 9a covers a joined part of the positive electrode lead 6 and the positive electrode tab 11c. The other insulating member 9a covers a joined part of the negative electrode lead 7 and the negative electrode tab 12c. Each of the two insulating members 9a is fixed to the electrode group 2 through a twofold insulating tape 9b.

As shown in FIG. 3 to FIG. 5, the nonaqueous electrolyte secondary battery 100 of this example further includes a positive electrode terminal 113 and a negative electrode terminal 114.

The positive electrode terminal 113 contains a rectangular-shaped head part 113a, and a shaft 113b extending downward from a back surface of the head part 113a. Similarly, the negative electrode terminal 114 includes a rectangular-shaped head part 114a, and a shaft 114b extending downward from a back surface of the head part 114a. Each of the positive electrode terminal 113 and the negative electrode terminal 114 is mounted on an upper surface of the sealing member 111b through an insulating gasket 115. The shaft 113b of the positive electrode terminal 113 is inserted into a through hole 115a of the insulating gasket 115, a through hole of the sealing member 111b, the through hole 8a' of the insulator 8, and the through hole 6b of the connection plate 6a in the positive electrode lead 6, and caulked and fixed to them. The shaft 114b of the negative electrode terminal 114 is inserted into a through hole 115a of the insulating gasket 115, a through hole of the sealing member 111b, the through hole 8b' of the insulator 8, and the through hole 7b of the connection plate 7a in the negative electrode lead 7, and caulked and fixed to them. In this way, the positive electrode terminal 113 is electrically connected to the positive electrode lead 6, and the negative electrode terminal 114 is electrically connected to the negative electrode lead 7.

In the nonaqueous electrolyte battery 100 having the structure described above, the injection of the nonaqueous electrolyte can be performed through the opening inlet on the sealing member 111b, after the electrode group 2 is housed in the container 111a and the sealing member 111b is joined to the opening of the container 111a. After the injection of the nonaqueous electrolyte, as shown in FIG. 3, a metal sealing plug 123 is inserted into the inlet and welded to it, whereby the container member 111 can be sealed.

The nonaqueous electrolyte battery according to the second embodiment includes the flat-shaped wound electrode group according to the first embodiment, and thus it can eexhibit the high energy density and the excellent life property.

[Example]

Hereinbelow, the present invention is described in more detail by means of Examples. The present invention is not limited to the Examples described below without departing from the gist of the invention.

(Example 1)

In Example 1, a nonaqueous electrolyte secondary battery was produced which has the same structure as that of the nonaqueous electrolyte secondary battery 100 shown in FIG 3 to FIG 5, including the wound electrode group 1 shown in FIG 1, FIG 2A and FIG 2B.

[Production of Positive Electrode 11]

First, as a positive electrode active material, lithium nickel cobalt manganese composite oxide $LiNi_{1/3}Co_{1/3}Mn_{1/3}O_2$ and lithium cobalt composite oxide $LiCoO_2$ were provided. These were mixed in a ratio of $LiNi_{1/3}Co_{1/3}Mn_{1/3}O_2$ to $LiCoO_2$ of 2:1 to obtain an active material mixture. The active material mixture, acetylene black as a conductive agent, graphite as a further conductive agent, and polyvinylidene fluoride as a binder were mixed in a mass ratio of 100:2:3:3. The thus obtained mixture was put into N-methyl-2-pyrrolidone as a solvent, which was kneaded and stirred in a planetary mixer to prepare a positive electrode slurry.

Next, an aluminum foil having a thickness of 20 $\mu$m was provided as a positive electrode current collector. The aluminum foil has a belt-like shape extending from the first end face to the second end face.

Both surfaces of the aluminum foil were coated with the positive electrode slurry previously prepared in a coating amount per unit area of 70 $g/m^2$ in a coating apparatus. At that time, a part of the aluminum foil was not coated with the positive electrode slurry, and a non-coated positive electrode slurry part which has a belt-like shape and extends from the first end face to the second end face of the aluminum foil was left.

Next, the thus obtained coating film was dried. Subsequently, the dried coating film and the aluminum foil were rolled in a roll press machine so that an electrode density was 3.4 g/cc. In this way, a positive electrode 11 including the positive electrode current collector and the positive electrode layers formed on the surfaces of the positive electrode current collector was obtained.

[Production of Negative Electrode 12]

First, lithium titanate $Li_4Ti_5O_{12}$ was provided as a negative electrode active material. The active material, graphite as a conductive agent and polyvinylidene fluoride as a binder were mixed in a mass ratio of 100:15:4. The thus obtained mixture was put into N-methyl-2-pyrrolidone as a solvent, which was kneaded and stirred in a planetary mixer to prepare negative electrode slurry.

Next, an aluminum foil having a thickness of 20 μm was provided as a negative electrode current collector. The aluminum foil has a belt-like shape extending from the first end face to the second end face.

Both surfaces of the aluminum foil were coated with the negative electrode slurry previously prepared in a coating amount per unit area of 65 g/m$^2$ in a coating apparatus. At that time, a part of the aluminum foil was not coated with the negative electrode slurry, and a non-coated negative electrode slurry part which has a belt-like shape and extends from the first end face to the second end face of the aluminum foil was left.

Next, the thus obtained coating film was dried. Subsequently, the dried coating film and the aluminum foil were rolled in a roll press machine so that an electrode density was 2.4 g/cc. In this way, a negative electrode 12 including the negative electrode current collector and the negative electrode layers formed on the surfaces of the negative electrode current collector was obtained.

[Production of Wound Electrode Group 1]

Two separators having a thickness of 30 μm were provided as a separator 13. Next, one separator 13, the negative electrode 12 previously produced, one more separator 13, and the positive electrode 11 previously produced were laminated in this order to obtain a laminate 1. At that time, the lamination was performed so that an edge part 11e (a projecting part of the positive electrode 11) in the positive electrode 11, which is adjacent to the first end face $11_1$ of the positive electrode 11 and does not face the negative electrode 12, has a length of 70.1 mm.

Next, the laminate 1 was transferred to a winding apparatus. At first, the separator 13 and the positive electrode 11 in the laminate 1 were bent. Next, the negative electrode 12 was additionally bent, and the whole laminate was bent, which was spirally wound. When the winding was performed, an initial angle of the core was adjusted so that a length $L_A$ of the negative electrode 12 in the innermost circumference 1A was 69.6 mm, and a length $L_C$ of the positive electrode 11 in the innermost circumference 1A was 69.7 mm. The thus obtained wound body was pressed to obtain a flat-shaped wound electrode group 1.

[Assembly of Battery Unit]

Each member as explained with reference to FIG. 4 and FIG. 5 was provided, and a battery unit 100 having the same structure as that of the nonaqueous electrolyte battery 100 shown in FIG. 3 to FIG. 5 was produced in the following procedures.

First, an insulator 8 was privided on a back surface of an aluminum sealing member 111b. Next, a head part 113a of a positive electrode terminal 113 was mounted on an upper surface of the sealing member 111b through an insulating gasket 115, and a shaft 113b of the positive electrode terminal 113 was inserted into one through hole of the sealing member 111b, and a through hole 8a' of the insulator 8. Similarly, a head part 114a of a negative electrode terminal 114 was mounted on the upper surface of the sealing member 111b through an insulating gasket 115, and a shaft 114b was inserted into the other through hole of the sealing member 111b and a through hole 8b' of the insulator 8. Thus, a sealing member 111b as shown in FIG. 4 and FIG. 5 was obtained.

Next, a positive electrode tab 11c of the wound electrode group 1 previously produced was sandwiched between bifurcated current-collector parts 6c of a positive electrode lead 6 and, while maintaining such state, the positive electrode tab 11c was welded to the positive electrode lead 6. Similarly, a negative electrode tab 12c of the wound electrode group 1 was sandwiched between bifurcated current-collector parts 7c of a negative electrode lead 7 and, while maintaining such state, the negative electrode tab 12c was welded to the negative electrode lead 7. Next, a connection plate 6a of the positive electrode lead 6 was caulked and fixed to the positive electrode terminal 113. Similarly, a connection plate 7a of the negative electrode lead 7 was caulked and fixed to the negative electrode terminal 114. Thus, the electrode group 2 and the sealing member 111b were integrated.

Next, the positive electrode lead 6 and the positive electrode tab 11c were covered with one insulating member 9a so that they were fixed by the insulating member. Similarly, the negative electrode lead 7 and the negative electrode tab 12c were covered with the other insulating member 9a so that they were fixed by the insulating member. Then, each of the insulating members 9a was fixed with an insulating tape 9b.

A unit of the insulating member 9a, the positive electrode lead 6 and the positive electrode tab 11c, fixed as above, and a unit of the insulating member 9a, the negative electrode lead 7 and the negative electrode tab 12c, fixed as above, were inserted into an aluminum container 111a. Then, a sealing member 111b was welded with an opening of the container 111a by laser to produce a battery unit 100. The produced battery unit 100 had a rectangular shape with a width of 10 mm, a height of 10 mm, and a thickness of 30 mm.

[Preparation of Nonaqueous Electrolyte]

Ethylene-carbonate and dimethyl carbonate were mixed in a ratio of 1:1 to prepare a nonaqueous solvent. Lithium hexafluorophosphate $LiPF_6$ as an electrolyte was dissolved in the nonaqueous solvent in a concentration of 1 mol/L. Thus, a nonaqueous electrolyte was obtained.

[Injection of Nonaqueous Electrolyte and Completion of Nonaqueous Electrolyte Battery 100]

The prepared nonaqueous electrolyte was injected into the battery unit 100 via a liquid inlet of the sealing member 111b. After the injection, an aluminum sealing member 123 was fitted into the liquid inlet, and a periphery of the sealing member 123 was welded to the sealing member 111b. Thus, a nonaqueous electrolyte battery 100 of Example 1 was completed.

[Initial Charge]

The nonaqueous electrolyte battery 100 was subjected to an initial charge. The initial charge was performed by a constant-current charge at 25°C up to 2.8 V and then a constant voltage charge until a current value reached 0.01 C.

[Measurement of Capacity]

The nonaqueous electrolyte battery 100, which had been subjected to the initial charge, was heated at 60°C for 150 hours in an air atmosphere, and then subjected to a constant-current charge at 0.2 C at 25°C up to 2.8 V. After that, the battery unit 100 was charged at a constant voltage until the current value reached 0.01 C. Then, the battery unit 100 was discharged at 0.33 C until a voltage reached 1.3 V, and a discharge capacity was measured. The measure discharge capacity was defined as a rated capacity of the nonaqueous electrolyte battery 100 of Example 1. The rated capacity of the nonaqueous electrolyte battery 100 of Example 1 was 22.23 Ah.

[Charge-and-Discharge Cycle Test and Storage Test]

Next, the nonaqueous electrolyte battery 100 was subjected to 1000 cycles of charge-and-discharge cycle test in an atmosphere of 40°C. In one charge-and-discharge cycle, the nonaqueous electrolyte battery 100 was subjected to a constant-current charge at 1 C up to 2.8 V; after that, a constant-voltage charge was performed until the current value reached 0.01 C, then a constant-current discharge was performed at 1 C until the voltage reached 1.3 V. There was a 30 minute rest between the charge and the discharge. After 1000 cycles of charge-and-discharge were performed, the nonaqueous electrolyte battery 100 was subjected to a constant-current charge at 0.2 C at 25°C up to 2.8 V, and then a constant-voltage charge was performed until the current value reached 0.01 C. After that, the nonaqueous electrolyte battery 100 was stored in an atmosphere of 25°C for one month. After the storage, the nonaqueous electrolyte battery 100 was discharged at 0.33 C in an atmosphere of 25°C until the voltage reached 1.3 V, and a discharge capacity was measured. The obtained discharge capacity was defined as a capacity after storage of the nonaqueous electrolyte battery 100 of Example 1. The nonaqueous electrolyte battery 100 of Example 1 had a capacity of 19.23 Ah. The nonaqueous electrolyte battery 100 of Example 1, accordingly, had a self-discharge amount due to the storage of 3.00 Ah.

[Disassembly and Analysis]

After the evaluation, the battery was disassembled and the wound electrode group 1 was observed. The twist of the positive electrode 11 and the negative electrode 12 was not observed. A metal distribution of the wound electrode group 1 was observed by an energy dispersive X-ray spectroscopy. The precipitation of the metal was not observed on the electrode surface.

[Observation of Cross-Section of Wound Electrode Group 1]

A cross-section of the wound electrode group 1 of the nonaqueous electrolyte battery 100 of Example 1 was observed. The cross-section of the wound electrode group 1 had the same structure as that schematically shown in FIG. 2A. That is, the wound electrode group 1 included an innermost circumference 1A, and the innermost circumference included: a part 11A from the first end face $11_1$ of the positive electrode 11 to the bent part 11d of the positive electrode 11; a part 12A from the first end face $12_1$ of the negative electrode 12 to the bent part 12d of the negative electrode 12; and a part 13A of separator 13 from the second bent part 13a in contact with the bent part 11d of the positive electrode 11 to the first bent part 13b in contact with the bent part 12d of the negative electrode 12. In the innermost circumference 1A, both surfaces 11e-1 and 11e-2 of the edge part 11e adjacent to the first end face $11_1$ of the positive electrode 11 faced the negative electrode 12 through the separator 13. Similarly, both surfaces 12e-1 and 12e-2 of edge part 12e adjacent to the first end face $12_1$ of the negative electrode 12 faced the positive electrode 13 through the separator 13. In addition, in the innermost circumference 1A, the first end face $11_1$ of the positive electrode 11 faced the bent part 12d of the negative electrode 12 through the first bent part 13b of the separator 13. Similarly, in the innermost circumference 1A, the first end face $12_1$ of the negative electrode 12 faced the bent part 11d of the positive electrode 11 through the second bent part 13a of the separator 13. On the other hand, the wound electrode group 1 included a outermost circumference 1B, and the outermost circumference 1B included: a part 11B including the second end face $11_2$ of the positive electrode 11; a part 12B including the second end face $12_2$ of the negative electrode 12; and the edge parts 13B of the separators 13. In the outermost circumference 1B, the part 12B of the negative electrode 12 faced the part 11B of the positive electrode 11 through the separator 13, and was located in the side further out than the part 11B of the positive electrode 11. In addition, parts 13B of the two separators 13 were arranged on the outside of the part 12B of the negative electrode 12. The two separators 13 were wound so that they surrounded the second end face $11_2$ of the positive electrode 11 and the second end face $12_2$ of the negative electrode 12.

In addition, in the innermost circumference 1A of the wound electrode group 1 of the nonaqueous electrolyte battery 100 of Example 1, a length $L_C$ of the positive electrode 11, a length $L_A$ of the negative electrode 12, and a length L of the separator were measured as in the procedures described above. The results are shown in Table 1 below. The wound electrode group 1 of the nonaqueous electrolyte battery 100 of Example 1 had a $(2L-L_A-L_C)/L$ of 0.01.

[Confirmation of Operating Potential of Negative Electrode 12]

An operating potential of the negative electrode 12 was confirmed in the following procedures.

After the nonaqueous electrolyte battery 100 was fully charged, the rated capacity was discharge at 0.2C. After that, the battery was disassembled, and 1 $cm^2$ of the negative electrode 12 was taken out. The electrode was washed with ethyl methyl carbonate and was used as a negative electrode for a three-pole cell. During the disassembly, a facing area of the positive electrode 11 and the negative electrode 12 was examined, and was 1.12 $m^2$. A value obtained by dividing a rated capacity of the battery 100 by the facing area: 1.12 $m^2$ was defined as a rated capacity of the three-pole cell. On the other hand, a three-pole cell in which the negative electrode 12 was used as a working electrode, metal lithium was used as a counter electrode, and metal lithium was used as a reference electrode was produced in an argon atmosphere. While a voltage between the working electrode and the reference electrode of the three-pole cell was measured, an electrical current of 0.2 C was passed between the action electrode and the counter electrode to charge the three-pole cell by the rated capacity thereof, whereby a closed circuit voltage at the end of charge was examined. As a result, the closed circuit voltage was 1.33 V vs. Li/Li$^+$. This voltage was defined as an operating potential of the negative electrode 12. Should be noted that a direction of insertion of Li to the negative electrode 12 is defined as charge.

(Example 2)

In Example 2, a nonaqueous electrolyte secondary battery 100 was produced in the same procedures as in Example 1 above, except that during the formation of the laminate 1, the lamination was performed so that the length of the edge part 11e of the positive electrode 11 which was adjacent to the first end face $11_1$ of the positive electrode 11 and did not face the negative electrode 12 (the projection part of the positive electrode 11) was 75.0 mm; and during the winding, the initial angle of the core was adjusted so that the length $L_A$ of the negative electrode 12 in the innermost circumference 1A was 50.0 mm and the length $L_C$ of the positive electrode 11 in the innermost circumference 1A was 55.0 mm.

The rated capacity of the nonaqueous electrolyte battery 100 of Example 2 was measured in the same procedures as explained in Example 1. The rated capacity of the nonaqueous electrolyte battery 100 of Example 2 was 22.12 Ah.

The nonaqueous electrolyte secondary battery 100 was subjected to the charge-and-discharge cycle test and the storage test in the same procedures as in Example 1. After the storage, the nonaqueous electrolyte battery 100 was discharged at 0.33 C in an atmosphere of 25°C until the voltage reached 1.3 V, and the discharge capacity was measured.

As a result, a capacity of 19.10 Ah was obtained. A self-discharge amount of the nonaqueous electrolyte battery 100 of Example 2 due to the storage was, accordingly, 3.02 Ah.

After the evaluation, the battery was disassembled, and the wound electrode group 1 was observed. The twist of the positive electrode 11 and the negative electrode 12 was not observed. In addition, a metal distribution on the wound electrode group 1 was observed by an energy dispersive X-ray spectroscopy. The precipitation of the metal was not observed on the electrode surface.

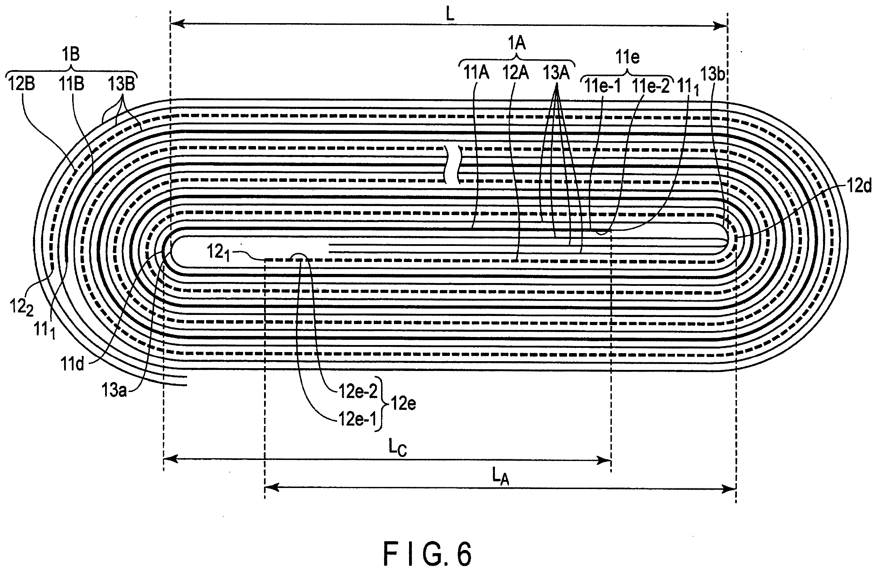

A cross-section of the wound electrode 1 of the nonaqueous electrolyte battery 100 of Example 2 was observed. The cross-section of the wound electrode group 1 of Example 2 had the same structure as that schematically shown in FIG. 6. As is apparent from the comparison of FIG. 2A with FIG. 6, in the wound electrode group 1 of Example 2, the distance from first end face $11_1$ of the positive electrode 11 to the one bent part 13b of the separator 13 in the innermost circumference 1A was larger than that of the wound electrode group 1 shown in FIG. 2A, i.e., that of the wound electrode group 1 of the Example 1. In addition, in the wound electrode group 1 of Example 2, the distance from first end face $12_1$ of the negative electrode 12 to the one bent part 13a of the separator 13 in the innermost circumference 1A was larger than that of the wound electrode group 1 shown in FIG. 2A, i.e., that of the wound electrode group 1 of Example 1. For the other points, the cross-sectional structure of the wound electrode group 1 of Example 2 was the same as that of Example 1.

The length $L_C$ of the positive electrode 11, the length $L_A$ of the negative electrode 12, and the length of L of the separator in the innermost circumference 1A of the wound electrode group 1 of the nonaqueous electrolyte battery 100 of Example 2 were measured in the procedures explained above. The results are shown in Table 1 below. The wound electrode group 1 of the nonaqueous electrolyte battery 100 of Example 2 had a $(2L-L_A-L_C)/L$ of 0.50.

(Example 3)

In Example 3, a nonaqueous electrolyte secondary battery 100 was produced in the same procedures as in Example 1 above, except that during the formation of the laminate 1, the lamination was performed so that the length of the edge part 11e of the positive electrode 11 which was adjacent to the first end face $11_1$ of the positive electrode 11 and did not face the negative electrode 12 (the projection part of the positive electrode 11) was 54.0 mm; and during the winding, the initial angle of the core was adjusted so that the length $L_A$ of the negative electrode 12 in the innermost circumference 1A was 50.0 mm and the length $L_C$ of the positive electrode 11 in the innermost circumference 1A was 34.0 mm.

The rated capacity of the nonaqueous electrolyte battery 100 of Example 3 was measured in the same procedures as explained in Example 1. The rated capacity of the nonaqueous electrolyte battery 100 of Example 3 was 22.08 Ah.

The nonaqueous electrolyte secondary battery 100 was subjected to the charge-and-discharge cycle test and the storage test in the same procedures as in Example 1. After the storage, the nonaqueous electrolyte battery 100 was discharged at 0.33 C in an atmosphere of 25°C until the voltage reached 1.3 V, and the discharge capacity was measured. As a result, a capacity of 19.07 Ah was obtained. A self-discharge amount of the nonaqueous electrolyte battery 100 of Example 3 due to the storage was, accordingly, 3.01 Ah.

After the evaluation, the battery was disassembled, and the wound electrode group 1 was observed. The twist of the positive electrode 11 and the negative electrode 12 was not observed. In addition, a metal distribution on the wound electrode group 1 was observed by an energy dispersive X-ray spectroscopy. The precipitation of the metal was not observed on the electrode surface.

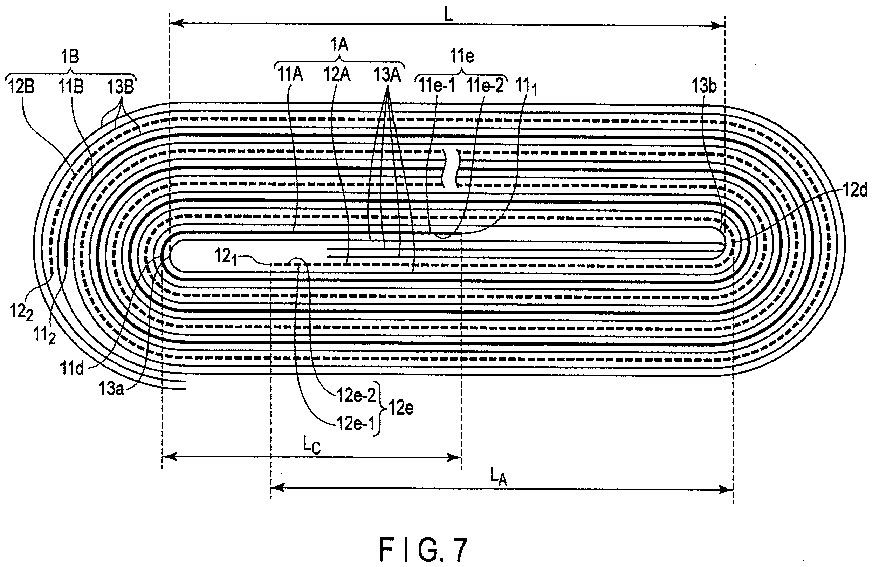

A cross-section of the wound electrode 1 of the nonaqueous electrolyte battery 100 of Example 3 was observed. The cross-section of the wound electrode group 1 of Example 3 had the same structure as that schematically shown in FIG. 7. As apparent from the comparison of FIG. 2A and FIG. 6 with FIG. 7, in the wound electrode group 1 of Example 3, the distance from first end face $11_1$ of the positive electrode 11 to the one bent part 13b of the separator 13 in the innermost circumference 1A was larger than that of the wound electrode group 1 shown in FIG. 2A, i.e., that of the wound electrode group 1 of the Example 1, and furthermore, larger than that of the wound electrode group 1 shown in FIG. 6, i.e., that of the wound electrode group 1 of Example 2. In addition, in the wound electrode group 1 of Example 3, the distance from first end face $12_1$ of the negative electrode 12 to the one bent part 13a of the separator 13 in the innermost circumference 1A was larger than that of the wound electrode group 1 of Example 1, and was equal to that of the wound electrode group 1 of Example 2. For the other points, the cross-sectional structure of the wound electrode group 1 of Example 3 was the same as those of Example 1 and Example 2.

The length $L_C$ of the positive electrode 11, the length $L_A$ of the negative electrode 12, and the length of L of the separator in the innermost circumference 1A of the wound electrode group 1 of the nonaqueous electrolyte battery 100 of Example 3 were measured in the procedures explained above. The results are shown in Table 1 below. The wound electrode group 1 of the nonaqueous electrolyte battery 100 of Example 3 had a $(2L-L_A-L_C)/L$ of 0.80.

(Example 4)

In Example 4, a nonaqueous electrolyte secondary battery 100 was produced in the same procedures as in Example 1 above, except that during the formation of the laminate 1, the lamination was performed so that the length of the edge part 11e of the positive electrode 11 which was adjacent to the first end face $11_1$ of the positive electrode 11 and did not face the negative electrode 12 (the projecting part of the positive electrode 11) was 66.0 mm; and during the winding, the initial angle of the core was adjusted so that the length $L_A$ of the negative electrode 12 in the innermost circumference 1A was 30.0 mm and the length $L_C$ of the positive electrode 11 in the innermost circumference 1A was 26.0 mm.

The rated capacity of the nonaqueous electrolyte battery 100 of Example 4 was measured in the same procedures as explained in Example 1. The rated capacity of the nonaqueous electrolyte battery 100 of Example 4 was 22.01 Ah.

The nonaqueous electrolyte secondary battery 100 was subjected to the charge-and-discharge cycle test and the storage test in the same procedures as in Example 1. After the storage, the nonaqueous electrolyte battery 100 was discharged at 0.33 C in an atmosphere of 25°C until the voltage reached 1.3 V, and the discharge capacity was measured. As a result, a capacity of 19.05 Ah was obtained. A self-discharge amount of the nonaqueous electrolyte battery 100 of Example 4 due to the storage was, accordingly, 2.96 Ah.

After the evaluation, the battery was disassembled, and the wound electrode group 1 was observed. The twist of the positive electrode 11 and the negative electrode 12 was not observed. In addition, a metal distribution on the wound electrode group 1 was observed by an energy dispersive X-ray spectroscopy. The precipitation of the metal was not observed on the electrode surface.

The length $L_C$ of the positive electrode 11, the length $L_A$ of the negative electrode 12, and the length of L of the separator in the innermost circumference 1A of the wound electrode group 1 of the nonaqueous electrolyte battery 100 of Example 4 were measured in the procedures explained above. The results are shown in Table 1 below. The wound electrode group 1 of the nonaqueous electrolyte battery 100 of Example 4 had a $(2L-L_A-L_C)/L$ of 1.20.

(Example 5)

In Example 5, a nonaqueous electrolyte secondary battery 100 was produced in the same procedures as in Example 1 above, except that during the formation of the laminate 1, the lamination was performed so that the length of the edge part 11e of the positive electrode 11 which was adjacent to the first end face $11_1$ of the positive electrode 11 and did not face the negative electrode 12 (the projecting part of the positive electrode 11) was 75.0 mm; and during the winding, the initial angle of the core was adjusted so that the length $L_A$ of the negative electrode 12 in the innermost circumference 1A was 15.0 mm and the length $L_C$ of the positive electrode 11 in the innermost circumference 1A was 20.0 mm.

The rated capacity of the nonaqueous electrolyte battery 100 of Example 5 was measured in the same procedures as explained in Example 1. The rated capacity of the nonaqueous electrolyte battery 100 of Example 5 was 22.09 Ah.

The nonaqueous electrolyte secondary battery 100 was subjected to the charge-and-discharge cycle test and the storage test in the same procedures as in Example 1. After the storage, the nonaqueous electrolyte battery 100 was discharged at 0.33 C in an atmosphere of 25°C until the voltage reached 1.3 V, and the discharge capacity was measured. As a result, a capacity of 19.05 Ah was obtained. A self-discharge amount of the nonaqueous electrolyte battery 100 of Example 5 due to the storage was, accordingly, 3.04 Ah.

After the evaluation, the battery was disassembled, and the wound electrode group 1 was observed. The twist of the positive electrode 11 and the negative electrode 12 was not observed. In addition, a metal distribution on the wound electrode group 1 was observed by an energy dispersive X-ray spectroscopy. The precipitation of the metal was not observed on the electrode surface.

The length $L_C$ of the positive electrode 11, the length $L_A$ of the negative electrode 12, and the length of L of the separator in the innermost circumference 1A of the wound electrode group 1 of the nonaqueous electrolyte battery 100 of Example 5 were measured in the procedures explained above. The results are shown in Table 1 below. The wound electrode group 1 of the nonaqueous electrolyte battery 100 of Example 5 had a $(2L-L_A-L_C)/L$ of 1.50.

(Example 6)

In Example 6, a nonaqueous electrolyte secondary battery 100 was produced in the same procedures as in Example 1 above, except that during the formation of the laminate 1, the lamination was performed so that the length of the edge part 11e of the positive electrode 11 which was adjacent to the first end face $11_1$ of the positive electrode 11 and did not face the negative electrode 12 (the projecting part of the positive electrode 11) was 70.1 mm; and during the winding, the initial angle of the core was adjusted so that the length $L_A$ of the negative electrode 12 in the innermost circumference 1A was 0.3 mm and the length $L_C$ of the positive electrode 11 in the innermost circumference 1A was 0.4 mm.

The rated capacity of the nonaqueous electrolyte battery 100 of Example 6 was measured in the same procedures as explained in Example 1. The rated capacity of the nonaqueous electrolyte battery 100 of Example 6 was 22.26 Ah.

The nonaqueous electrolyte secondary battery 100 was subjected to the charge-and-discharge cycle test and the storage test in the same procedures as in Example 1. After the storage, the nonaqueous electrolyte battery 100 was discharged at 0.33 C in an atmosphere of 25°C until the voltage reached 1.3 V, and the discharge capacity was measured. As a result, a capacity of 19.22 Ah was obtained. A self-discharge amount of the nonaqueous electrolyte battery 100 of Example 6 due to the storage was, accordingly, 3.04 Ah.

After the evaluation, the battery was disassembled, and the wound electrode group 1 was observed. The twist of the positive electrode 11 and the negative electrode 12 was not observed. In addition, a metal distribution on the wound electrode group 1 was observed by an energy dispersive X-ray spectroscopy. The precipitation of the metal was not observed on the electrode surface.

The length $L_C$ of the positive electrode 11, the length $L_A$ of the negative electrode 12, and the length of L of the separator in the innermost circumference 1A of the wound electrode group 1 of the nonaqueous electrolyte battery 100 of Example 6 were measured in the procedures explained above. The results are shown in Table 1 below. The wound electrode group 1 of the nonaqueous electrolyte battery 100 of Example 6 had a $(2L-L_A-L_C)/L$ of 1.99.

(Example 7)

In Example 7, a nonaqueous electrolyte secondary battery 100 was produced in the same procedures as in Example 1 above, except that bronze type titanium oxide ($TiO_2(B)$) was used as the negative electrode active material; and the coating of the negative electrode slurry was adjusted so that a coating amount per unit area was 80 $g/m^2$.

The rated capacity of the nonaqueous electrolyte battery 100 of Example 7 was measured in the same procedures as explained in Example 1. The rated capacity of the nonaqueous electrolyte battery 100 of Example 7 was a rated capacity of 23.86 Ah.

The nonaqueous electrolyte secondary battery 100 was subjected to the charge-and-discharge cycle test and the storage test in the same procedures as in Example 1. After the storage, the nonaqueous electrolyte battery 100 was discharged at 0.33 C in an atmosphere of 25°C until the voltage reached 1.3 V, and the discharge capacity was measured. As a result, a capacity of 20.95 Ah was obtained. A self-discharge amount of the nonaqueous electrolyte battery 100 of Example 7 due to the storage was, accordingly, 2.91 Ah.

After the evaluation, the battery was disassembled, and the wound electrode group 1 was observed. The twist of the positive electrode 11 and the negative electrode 12 was not observed. In addition, a metal distribution on the wound electrode group 1 was observed by an energy dispersive X-ray spectroscopy. The precipitation of the metal was not observed on the electrode surface.

A cross-section of the wound electrode group 1 of the nonaqueous electrolyte battery 100 of Example 7 was observed. The cross-section of the wound electrode group 1 had the same structure as that schematically shown in FIG. 2A. The cross-sectional structure of the wound electrode group 1 of Example 7 was the same as that in Example 1.

The length $L_C$ of the positive electrode 11, the length $L_A$ of the negative electrode 12, and the length of L of the separator in the innermost circumference 1A of the wound electrode group 1 of the nonaqueous electrolyte battery 100 of Example 7 were measured in the procedures explained above. The results are, as shown in Table 1 below, the same as those of Example 1. Therefore, the wound electrode group 1 of the nonaqueous electrolyte battery 100 of Example 7 had a $(2L-L_A-L_C)/L$ of 0.01.

The operating potential of the negative electrode 12 of the wound electrode group 1 of the nonaqueous electrolyte battery 100 of Example 7 was measured in the same procedures as explained in Example 1. As a result, the negative electrode 12 of Example 7 had an operating potential of 1.1 V (vs. Li/Li$^+$).

(Comparative Example 1)

In Comparative Example 1, a nonaqueous electrolyte secondary battery 100 was produced in the same procedures as in Example 1 above, except that during the formation of the laminate 1, the lamination was performed so that the length of the edge part 11e of the positive electrode 11 which was adjacent to the first end face $11_1$ of the positive electrode 11 and did not face the negative electrode 12 (the projecting part of the positive electrode 11) was 60.0 mm; and during the winding, the initial angle of the core was adjusted so that the length $L_A$ of the negative electrode 12 in the innermost circumference 1A was 40.0 mm and the length $L_C$ of the positive electrode 11 in the innermost circumference 1A was 30.0 mm.

The rated capacity of the nonaqueous electrolyte battery 100 of Comparative Example 1 was measured in the same procedures as explained in Example 1. The rated capacity of the nonaqueous electrolyte battery 100 of Comparative Example 1 was 21.89 Ah.

The nonaqueous electrolyte secondary battery 100 was subjected to the charge-and-discharge cycle test and the storage test in the same procedures as in Example 1. After the storage, the nonaqueous electrolyte battery 100 was discharged at 0.33 C in an atmosphere of 25°C until the voltage reached 1.3 V, and the discharge capacity was measured. As a result, a capacity of 18.92 Ah was obtained. A self-discharge amount of the nonaqueous electrolyte battery 100 of Comparative Example 1 due to the storage was, accordingly, 2.97 Ah.

After the evaluation, the battery was disassembled, and the wound electrode group 1 was observed. The twist of the positive electrode 11 and the negative electrode 12 was not observed. In addition, a metal distribution on the wound electrode group 1 was observed by an energy dispersive X-ray spectroscopy. The precipitation of the metal was not observed on the electrode surface.

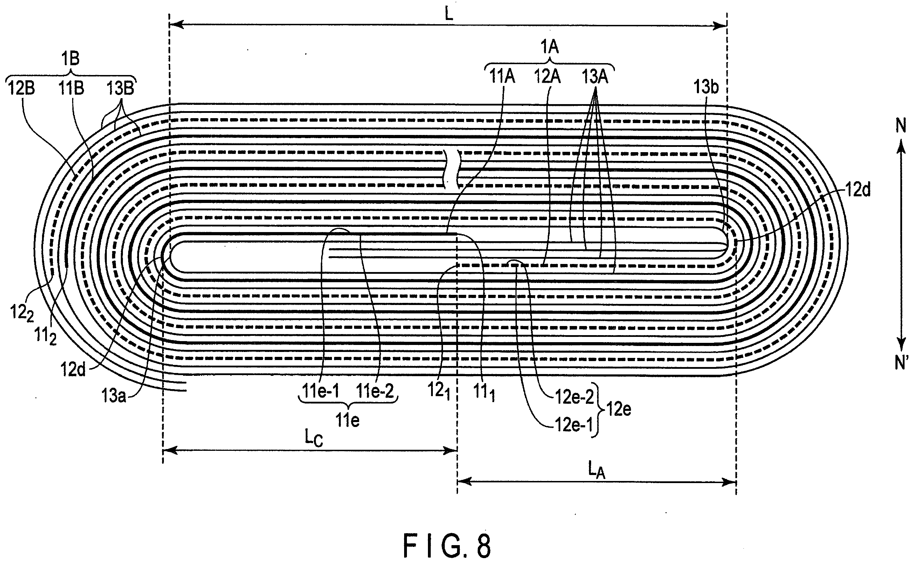

A cross-section of the wound electrode 1 of the nonaqueous electrolyte battery 100 of Comparative Example 1 was observed. The cross-section of the wound electrode group 1 of Comparative Example 1 had the same structure as that schematically shown in FIG. 8. As shown in FIG. 8, in the wound electrode group 1 of Comparative Example 1, the positions of the first end face $11_1$ of the positive electrode 11 and the first end face $12_1$ of the negative electrode 12 coincided with each other in the direction N-N' vertical to the winding direction C-C' and to the winding axis R-R', in the innermost circumference 1A. Therefore, as shown in FIG. 8, in the wound electrode group 1 of Comparative Example 1, only one surface 11e-1 of the edge part 11e adjacent to the first end face $11_1$ of the positive electrode 11 faced the negative electrode 12 through the separator 13, and the other surface 11e-2 thereof faced another part of the positive electrode 11, in the innermost circumference 1A. In addition, only the surface 12e-1 of the edge part 12e adjacent to the first end face $12_1$ of the negative electrode 12 faced the positive electrode 11 through the separator 13, and the other surface 12e-2 faced another part of the negative electrode 12, in the innermost circumference 1A. For the other points, the cross-sectional structure of the wound electrode group 1 of Comparative Example 1 was the same as those of Example 1 to Example 7.

The length $L_C$ of the positive electrode 11, the length $L_A$ of the negative electrode 12, and the length of L of the separator in the innermost circumference 1A of the wound electrode group 1 of the nonaqueous electrolyte battery 100 of Comparative Example 1 were measured in the procedures explained above. The results are shown in Table 1 below. The wound electrode group 1 of the nonaqueous electrolyte battery 100 of Example 3 had a $(2L-L_A-L_C)/L$ of 1.00.

(Comparative Example 2)

In Comparative Example 2, a nonaqueous electrolyte secondary battery 100 of Comparative Example 1 was constructed in the same procedures as in Example 2 above, except that graphite was used as the negative electrode active material; and the coating of the negative electrode slurry was adjusted so that a coating amount per unit area was 40 g/m$^2$.

The rated capacity of the nonaqueous electrolyte battery 100 of Comparative Example 2 was measured in the same procedures as explained in Example 1. The rated capacity of the nonaqueous electrolyte battery 100 of Comparative Example 2 had a rated capacity of 24.35 Ah.

The nonaqueous electrolyte secondary battery 100 was subjected to the charge-and-discharge cycle test and the storage test in the same procedures as in Example 1. After the storage, the nonaqueous electrolyte battery 100 was discharged at 0.33 C in an atmosphere of 25°C until the voltage reached 1.3 V, and the discharge capacity was measured. As a result, a capacity of 5.24 Ah was obtained. A self-discharge amount of the nonaqueous electrolyte battery 100 of Comparative Example 2 due to the storage was, accordingly, 19.11 Ah.

After the evaluation, the battery was disassembled, and the wound electrode group 1 was observed. It was found that the positive electrode 11 and the negative electrode 12 were twisted. In addition, a metal distribution on the wound electrode group 1 was observed by an energy dispersive X-ray spectroscopy. The precipitation of the metal Li was observed on the negative electrode surface 12.

A cross-section of the wound electrode group 1 of the nonaqueous electrolyte battery 100 of Comparative Example 2 was observed. The cross-section of the wound electrode group 1 had the same structure as that schematically shown in FIG. 6. The cross-sectional structure of the wound electrode group 1 of Comparative Example 2 was the same as that in Example 2.

The length $L_C$ of the positive electrode 11, the length $L_A$ of the negative electrode 12, and the length of L of the separator in the innermost circumference 1A of the wound electrode group 1 of the nonaqueous electrolyte battery 100 of Comparative Example 2 were measured in the procedures explained above. The results are, as shown in Table 1 below, the same as those in Example 2. From the above, the wound electrode group 1 of the nonaqueous electrolyte battery 100 of Comparative Example 2 had a $(2L-L_A-L_C)/L$ of 0.05.

The operating potential of the negative electrode 12 of the wound electrode group 1 of the nonaqueous electrolyte battery 100 of Comparative Example 2 was measured in the same procedures as explained in Example 1. As a result, the negative electrode 12 of Comparative Example 2 had an operating potential of 0.3 V (vs. Li/Li$^+$).

[Table 1]

| | Negative Electrode Active Material | $L_A$ [mm] | $L_C$ [mm] | L [mm] | $(2L-L_A-L_C)/L$ | Rated Capacity [Ah] | Capacity after Storage [Ah] | Self-Discharge Amount [Ah] | Length of Projecting Part of Positive Electrode [mm] |
|---|---|---|---|---|---|---|---|---|---|
| Example 1 | $Li_4Ti_5O_{12}$ | 69.6 | 69.7 | 70.0 | 0.01 | 22.23 | 19.23 | 3.00 | 70.1 |
| Example 2 | $Li_4Ti_5O_{12}$ | 50.0 | 55.0 | 70.0 | 0.50 | 22.12 | 19.10 | 3.02 | 75.0 |
| Example 3 | $Li_4Ti_5O_{12}$ | 50.0 | 34.0 | 70.0 | 0.80 | 22.08 | 19.07 | 3.01 | 54.0 |
| Example 4 | $Li_4Ti_5O_{12}$ | 30.0 | 26.0 | 70.0 | 1.20 | 22.01 | 19.05 | 2.96 | 66.0 |
| Example 5 | $Li_4Ti_5O_{12}$ | 15.0 | 20.0 | 70.0 | 1.50 | 22.09 | 19.05 | 3.04 | 75.0 |
| Example 6 | $Li_4Ti_5O_{12}$ | 0.3 | 0.4 | 70.0 | 1.99 | 22.26 | 19.22 | 3.04 | 70.1 |
| Example 7 | $TiO_2$ (B) | 69.6 | 69.7 | 70.0 | 0.01 | 23.86 | 20.95 | 2.91 | 70.1 |
| Comparative Example 1 | $Li_4Ti_5O_{12}$ | 40.0 | 30.0 | 70.0 | 1.00 | 21.89 | 18.92 | 2.97 | 60.0 |
| Comparative Example 2 | Graphite | 50.0 | 55.0 | 70.0 | 0.50 | 24.35 | 5.24 | 19.11 | 75.0 |

[Discussion]

From the results shown in Table 1, it is found that the nonaqueous electrolyte batteries 100 of Example 1 to Example 6 had a higher rated capacity than that of the nonaqueous electrolyte battery 100 of Comparative Example 1. In the nonaqueous electrolyte battery 100 of Comparative Example 1, only the one surface of the edge part 11e of the positive electrode 11 faced the negative electrode 12 through the separator 13 and only the one surface of the edge part 12e of the negative electrode 12 faced the positive electrode 11 through the separator 13 in the innermost circumference 1A of the wound electrode group 1, and thus the rated capacity thereof was lower than those of the nonaqueous electrolyte batteries 100 of Examples 1 to 6.

Further, the nonaqueous electrolyte batteries 100 of Example 1 to Example 6 could suppress the self-discharge, like in the nonaqueous electrolyte battery 100 of Comparative Example 1. This is because, though in the nonaqueous electrolyte batteries of Examples 1 to 6 the both surfaces of the edge part 12e of the negative electrode 12 faced the positive electrode 11 through the separator 13 in the innermost circumference 1A of the wound electrode group 1, the negative electrode active material contained in the negative electrode 12 had an operating potential nobler than 1.0 V (vs. Li/Li$^+$), and thus the metal precipitation could be suppressed on the surface of the negative electrode. This fact is proved, as described above, by the confirmation of the metal distribution on the electrode surface using the energy dispersive X-ray spectroscopy.

In addition, as apparent from the results shown in Table 1, the nonaqueous electrolyte 100 of Example 7 could also show higher rated capacity than that of the nonaqueous electrolyte battery 100 of Comparative Example 1 while the self-discharge was suppressed, similar to the nonaqueous electrolyte batteries 100 of Examples 1 to 6. From that result, it was proved that even if the negative electrode active material was changed, the same effects could be obtained as long as the active material had an operating potential nobler than 1.0 V (vs. Li/Li$^+$),.

On the other hand, the nonaqueous electrolyte battery 100 of Comparative Example 2 in which graphite was used as the negative electrode active material was remarkably higher in the self-discharge capacity than that of the nonaqueous electrolyte batteries 100 of Examples 1 to 7. It is considered that one cause thereof is the precipitation of the metal lithium on the surface of the negative electrode 12 after the storage, as proved by the confirmation of the metal distribution on the electrode surface by the energy dispersive X-ray spectroscopy. As apparent from the disassembly of the battery, it is also considered that another cause thereof is the twist of the negative electrode 12. It is considered that the twist of the negative electrode 12 was caused by the greatly changed volume of the graphite due to the absorption and release of lithium.

(Example 8)

In Example 8, a nonaqueous electrolyte secondary battery 100 was produced in the same procedures as in Example 1 above, except for the following points.

In Example 8, first, the coating amount per unit area of the positive electrode slurry was adjusted to 140 g/m$^2$. In addition, the rolling using the roll press was performed so that the electrode density was 3.1 g/cc to obtain a positive electrode 11.

Furthermore, in Example 8, the coating amount per unit area of the negative electrode slurry was adjusted to 135 g/m$^2$. In addition, the rolling using the roll press was performed so that the electrode density was 2.1 g/cc to obtain a negative electrode 12.

Furthermore, in Example 8, a wound electrode group 1 in which the $L_A$, $L_C$, and L were the same values as in Example 1 was produced by adopting a smaller number of windings than the number of windings adopted in Example 1 in the winding apparatus, and thereby counterbalancing the increase of the coating amount of the positive electrode slurry and the increase of the coating amount of the negative electrode slurry.

The rated capacity of the nonaqueous electrolyte battery 100 of Example 8 was measured in the same procedures as explained in Example 1. The rated capacity of the nonaqueous electrolyte battery 100 of Example 8 was 23.52 Ah.

The nonaqueous electrolyte secondary battery 100 was subjected to the charge-and-discharge cycle test and the storage test in the same procedures as in Example 1. After the storage, the nonaqueous electrolyte battery 100 was discharged at 0.33 C in an atmosphere of 25°C until the voltage reached 1.3 V, and the discharge capacity was measured. As a result, a capacity of 20.48 Ah was obtained. A self-discharge amount of the nonaqueous electrolyte battery 100 of Example 8 due to the storage was, accordingly, 3.04 Ah.

After the evaluation, the battery was disassembled, and the wound electrode group 1 was observed. The twist of the positive electrode 11 and the negative electrode 12 was not observed. In addition, a metal distribution on the wound electrode group 1 was observed by an energy dispersive X-ray spectroscopy. The precipitation of the metal was not observed on the negative electrode surface 12.

The length $L_C$ of the positive electrode 11, the length $L_A$ of the negative electrode 12, and the length of L of the separator in the innermost circumference 1A of the wound electrode group 1 of the nonaqueous electrolyte battery 100 of Example 8 were measured in the procedures explained above. The results are shown in Table 1 below. The wound electrode group 1 of the nonaqueous electrolyte battery 100 of Example 8 had a $(2L-L_A-L_C)/L$ of 0.01.

(Example 9)

In Example 9, a nonaqueous electrolyte secondary battery 100 was constructed in the same procedures as in Example 8, except that during the formation of the laminate 1, the lamination was performed so that the length of the edge part 11e of the positive electrode 11 which was adjacent to the first end face $11_1$ of the positive electrode 11 and did not face the negative electrode 12 (the projection part of the positive electrode 11) was 68.0 mm; and during the winding, the initial angle of the core was adjusted so that the length $L_A$ of the negative electrode 12 in the innermost circumference 1A was 67.0 mm and the length $L_C$ of the positive electrode 11 in the innermost circumference 1A was 65.0 mm.

The rated capacity of the nonaqueous electrolyte battery 100 of Example 9 was measured in the same procedures as explained in Example 1. The rated capacity of the nonaqueous electrolyte battery 100 of Example 8 was 22.17 Ah.

The nonaqueous electrolyte secondary battery 100 was subjected to the charge-and-discharge cycle test and the storage test in the same procedures as in Example 1. After the storage, the nonaqueous electrolyte battery 100 was discharged at 0.33 C in an atmosphere of 25°C until the voltage reached 1.3 V, and the discharge capacity was measured. As a result, a capacity of 19.13 Ah was obtained. A self-discharge amount of the nonaqueous electrolyte battery 100 of Example 9 due to the storage was, accordingly, 3.04 Ah.

After the evaluation, the battery was disassembled, and the wound electrode group 1 was observed. The twist of the positive electrode 11 and the negative electrode 12 was not observed. In addition, a metal distribution on the wound electrode group 1 was observed by an energy dispersive X-ray spectroscopy. The precipitation of the metal was not observed on the negative electrode surface 12.

The length $L_C$ of the positive electrode 11, the length $L_A$ of the negative electrode 12, and the length of L of the separator in the innermost circumference 1A of the wound electrode group 1 of the nonaqueous electrolyte battery 100 of Example 9 were measured in the procedures explained above. The results are shown in Table 1 below. The wound electrode group 1 of the nonaqueous electrolyte battery 100 of Example 9 had a $(2L-L_A-L_C)/L$ of 0.11.

The results of Examples 8 and 9 are summarized in Table 2 below.

[Table 2]

|  | Negative Electrode Active Material | $L_A$ [mm] | $L_C$ [mm] | L [mm] | $(2L-L_A-L_C)/L$ | Rated Capacity [Ah] | Capacity after Storage [Ah] | Self-Discharge Amount [Ah] | Length of Projecting Part of Positive Electrode [mm] |
|---|---|---|---|---|---|---|---|---|---|
| Example 8 | $Li_4Ti_5O_{12}$ | 69.6 | 69.7 | 70.0 | 0.01 | 23.52 | 20.48 | 3.04 | 70.1 |
| Example 9 | $Li_4Ti_5O_{12}$ | 67.0 | 65.0 | 70.0 | 0.11 | 22.17 | 19.13 | 3.04 | 68.0 |

[Discussion]

As apparent from the results shown in Table 1 and Table 2, the nonaqueous electrolyte batteries 100 of Examples 8 and 9 could also exhibit higher rated capacity than that of the nonaqueous electrolyte battery 100 of Comparative Example 1, while the self-discharge was suppressed, similar to the nonaqueous electrolyte batteries 100 of Examples 1 to 7. From the results, it was proved that even if the coating amounts of the positive electrode and the negative electrode were changed, the same effects could be obtained.

The flat-shaped wound electrode group according to at least one embodiment and Example explained above includes the negative electrode containing negative electrode active material whose operating potential is nobler than 1.0 V (vs. Li/Li$^+$). In addition, in the innermost circumference of the wound electrode group, the both surfaces of the edge part of the positive electrode face the negative electrode through the separator, and the both surfaces of the edge part of the negative electrode face the positive electrode through the separator. For the structure above, the wound electrode group can realize the nonaqueous electrolyte battery capable of exhibiting the high energy density and the excellent life property.

While certain embodiments of the present invention have been described, these embodiments have been presented by way of example only, and are not intended to limit the scope of the invention. The novel embodiments may be embodied in a variety of other forms, and various omissions, substitutions and changes may be made without departing from the spirit of the invention. The accompanying claims and their equivalents are intended to cover such forms or modifications as would fall within the scope and spirit of the invention.

Reference Signs List

1: wound electrode group (laminate); 1A: innermost circumference; 1B: outermost circumference, 6: positive electrode lead; 6a: connection plate; 6b: through hole; 6c: current-collector part; 7: negative electrode lead; 7a: connection plate; 7b: through hole; 7c: current-collector part; 8: insulator; 8a: first recess; 8a': through hole; 8b: second recess; 8b': through hole; 8c: through hole; 9a: insulating member; 9b: insulating tape; 10: insulating tape; 11: positive electrode; 11A: part of positive electrode contained in innermost circumference; 11B: part of positive electrode contained in outermost circumference; 11a: positive electrode current collector; 11b: positive electrode layer; 11c: positive electrode tab; 11e: edge part; 11e-1 and 11e-2: surface of edge part, $11_1$: first end face, $11_2$: second end face, 12: negative electrode, 12A: part of negative electrode contained in innermost circumference; 12B: part of negative electrode contained in outermost circumference; 12a: negative electrode current collector; 12b: negative electrode layer; 12c: negative electrode current collection tab; 12e: edge part; 12e-1 and 12e-2: surface of edge part; $12_1$: first end face, $12_2$: second end face; 13: separator; 13A: part of separator contained in innermost circumference; 13B: part of separator contained in outermost circumference; 13a: second bent part; 13b: first bent part, 100: nonaqueous electrolyte battery; 111: container member, 111a: container; 111b: sealing member; 113: positive electrode terminal; 113a: head part; 113b: shaft; 114: negative electrode terminal; 114a: head part; 114b: shaft; 115: insulating gasket; 115a: through hole; 123: sealing plug.

**Claims**

1. A wound electrode group comprising a laminate which comprises:

   a positive electrode comprising a first end face and a second end face, and extending from the first end face to the second end face;
   a negative electrode comprising a negative electrode active material whose operating potential is nobler than 1.0 V (vs. Li/Li$^+$) and comprising a first end face and a second end face, and extending from the first end face to the second end face; and
   a separator provided between the positive electrode and the negative electrode,
   the laminate being wound in a flat-shape, wherein
   the positive electrode comprises an edge part adjacent to the first end face, and both surfaces of the edge part of the positive electrode face the negative electrode through the separator;
   the negative electrode comprises an edge part adjacent to the first end face, and both surfaces of the edge part of the negative electrode face the positive electrode through the separator; and
   an innermost circumference of the wound laminate comprises the edge part of the positive electrode and the edge part of the negative electrode.

2. The wound electrode group according to claim 1, wherein the positive electrode further comprises a bent part comprised in the innermost circumference, and the bent part of the positive electrode faces the first end face of the negative electrode through the separator;

the negative electrode further comprises a bent part comprised in the innermost circumference, and the bent part of the negative electrode faces the first end face of the positive electrode through the separator; and the separator, in the innermost circumference, comprises a first bent part and a second bent part, the first bent part faces the first end face of the positive electrode and the second bent part faces the first end face of the negative electrode, and
the wound electrode satisfies the following relative equation:

$$0.01 \leq (2L-L_A-L_C)/L \leq 0.8$$

wherein L [mm] is a distance between the first bent part and the second bent part of the separator; $L_A$ [mm] is a distance between the first end face of the negative electrode and the bent part of the negative electrode; and $L_C$ [mm] is a distance between the first end face of the positive electrode and the bent part of the positive electrode.

3. The wound electrode group according to claim 2, wherein the positive electrode comprises a positive electrode current collector and a positive electrode layer formed on both surfaces of the positive electrode current collector; and the negative electrode comprises a negative electrode current collector and a negative electrode layer formed on both surfaces of the negative electrode current collector.

4. The wound electrode group according to claim 2, wherein the negative electrode active material comprises a lithium-titanium composite oxide and/or monoclinic titanium dioxide.

5. A nonaqueous electrolyte battery comprising:

the wound electrode group according to claim 1; and a nonaqueous electrolyte.

6. The nonaqueous electrolyte battery according to claim 5, which further comprises a container member housing the wound electrode group and the nonaqueous electrolyte, wherein
the container member has a rectangular -shape with a bottom.

FIG. 1

FIG.2A

$11_1$ 11e $11_2$

$12_1$ 12e $12_2$

F I G. 2B

115 114a
123 115
115 113a 111b } 111
111a

100

F I G. 3

F I G. 4

FIG. 5

FIG.6

EP 3 113 276 A1

FIG.7

EP 3 113 276 A1

FIG.8

31

## INTERNATIONAL SEARCH REPORT

| | International application No. |
|---|---|
| | PCT/JP2015/052383 |

A. CLASSIFICATION OF SUBJECT MATTER
*H01M10/0587*(2010.01)i, *H01M4/48*(2010.01)i, *H01M4/485*(2010.01)i

According to International Patent Classification (IPC) or to both national classification and IPC

B. FIELDS SEARCHED

Minimum documentation searched (classification system followed by classification symbols)
H01M4/00-4/62, H01M10/05-10/0587, H01M10/36-10/39

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho    1971-2015   Toroku Jitsuyo Shinan Koho   1994-2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X Y | JP 2008-171632 A  (Sanyo Electric Co., Ltd.), 24 July 2008 (24.07.2008), paragraphs [0011] to [0050]; fig. 1 to 4 (Family: none) | 1,2,5,6 3,4 |
| X Y | JP 2012-043709 A  (Toshiba Corp.), 01 March 2012 (01.03.2012), paragraphs [0008] to [0089]; fig. 1 to 6 & US 2012/0156529 A1    & EP 2421080 A2 | 1-3,5,6 3,4 |
| Y | JP 2013-251109 A  (Toshiba Corp.), 12 December 2013 (12.12.2013), paragraphs [0041] to [0080] & US 2013/0323537 A1 | 4 |

☒  Further documents are listed in the continuation of Box C.          ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 April 2015 (08.04.15) | 21 April 2015 (21.04.15) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (July 2009)

**INTERNATIONAL SEARCH REPORT**

| International application No. |
|---|
| PCT/JP2015/052383 |

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2011-044312 A  (Toshiba Corp.),<br>03 March 2011 (03.03.2011),<br>paragraphs [0037] to [0061]<br>& US 2011/0045328 A1 | 4 |
| A | WO 2013/014833 A1  (Panasonic Corp.),<br>31 January 2013 (31.01.2013),<br>entire text<br>& JP 5649013 B2        & US 2014/0147715 A | 1-6 |

Form PCT/ISA/210 (continuation of second sheet) (July 2009)

**EP 3 113 276 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10012220 A